# EUROPÄISCHE PATENTSCHRIFT

(11) **EP 2 714 509 B1**
(45) Veröffentlichungstag und Bekanntmachung des Hinweises auf die Patenterteilung: **09.09.2015**
(21) Anmeldenummer: 12725308.6
(22) Anmeldetag: 24.05.2012
(51) Int. Cl.: B63H 21/38

(54) **VERFAHREN ZUR NOTKÜHLUNG UND/ODER NOTLÖSCHUNG EINER BATTERIE EINES WASSSERFAHRZEUGS UND WASSERFAHRZEUG**
METHOD FOR THE EMERGENCY COOLING AND/OR EMERGENCY EXTINGUISHING OF A BATTERY OF A WATERCRAFT AND WATERCRAFT
PROCÉDÉ DE REFROIDISSEMENT D'URGENCE ET/OU D'EXTINCTION D'URGENCE D'UNE BATTERIE DE VÉHICULE MARIN ET VÉHICULE MARIN

(30) Priorität: 26.05.2011 DE 102011076536
(43) Veröffentlichungstag der Anmeldung: 09.04.2014
(73) Patentinhaber: MTU Friedrichshafen GmbH, 88045 Friedrichshafen (DE)
(72) Erfinder: RIEGGER, Peter, 88662 Überlingen (DE); FILIP, Gerhard, 88677 Markdorf (DE)
(74) Vertreter: Spernat, Thomas Christian
(86) Internationale Anmeldenummer: PCT/EP2012/002212
(87) Internationale Veröffentlichungsnummer: WO 2012/159755

(56) Entgegenhaltungen:
- WO-A1-01/47768
- DE-A1-102009 045 271
- US-A- 5 362 265
- US-B1- 6 250 981

## Beschreibung

Die Erfindung betrifft ein Verfahren zur Notkühlung und/oder Notlöschung einer Batterie eines Wasserfahrzeugs sowie ein Wasserfahrzeug mit einer solchen Batterie.

Es ist beispielsweise aus der DE 10 2009 045 271 A1 bekannt, dass Lithium-Ionen-Batterien brennen können, wenn diese in einen Temperaturbereich geraten, der dazu geeignet ist, die in einer Zelle der Batterie befindlichen Chemikalien in Brand zu setzen. Abhängig von den verwendeten Materialien und den auslösenden Faktoren besteht eine mehr oder weniger große Gefahr für eine Entzündung. Eine Entzündung kann beispielsweise durch Überladen der Batterie über die zulässige Ladeschlussspannung, Überhitzung durch Überlastung, mechanische Beschädigung, interne Fehler oder dergleichen geschehen, die insbesondere auch noch dann auftreten können, wenn das die Batterie tragende Wasserfahrzeug in einem Notfall befindlich ist. Dabei wird nicht nur Hitze aufgrund offener Flammen frei, sondern es entstehen auch heiße und gesundheitsgefährdende Gase, die insbesondere einen Notfall eines Wasserfahrzeugs noch weiter verschlechtern können.

Es ist bekannt, solche Gase über eine Druckentlastung an eine Personen nicht gefährdende Stelle abzuleiten. Problematisch ist, dass eine im Allgemeinen Sauerstoffdonatoren enthaltende Batterie nur schwer gelöscht werden kann, sobald sie sich entzündet hat. Es ist deshalb üblich präventive Maßnahmen, die das Entzünden einer Batterie verhindem sollen, strikt einzuhalten. Dies betrifft insbesondere zulässige Betriebsbedingungen wie die Temperatur der Batterie und eine ständige Überwachung der Zellen einer Batterie hinsichtlich der Betriebsparameter. Eine solche Überwachung wird üblicherweise durch ein Batteriemanagementsystem (BMS) durchgeführt, das bei einem sich ankündigenden Notfall die Batterie abschalten kann.

Problematisch dabei ist, dass die Batterie gegebenenfalls zu früh abgeschaltet wird und gerade in einem Notfall nicht bis zuletzt funktionierend dem Wasserfahrzeug zur Verfügung steht. Andererseits besteht bei größeren aus mehreren Zellen aufgebauten Batterien die Gefahr, dass das Batteriemanagementsystem zwar die Batterie für einen Fehlerfall abschalten kann, es aber grundsätzlich nicht mehr möglich ist, die Batterie sofort zu entladen. Damit besteht selbst im Falle einer Notabschaltung der Batterie immer noch die Gefahr, dass in der Batterie gespeicherte Energie unkontrolliert freigesetzt wird.

Um auch solche Fehlerszenarien zu beherrschen, die eine Energiefreisetzung unvermeidbar machen, ist das Batteriegehäuse zusätzlich in ein Containment gepackt, das einer potentiellen Energiefreisetzung inklusive der gesamten potentiellen Brandlast vorhandener Komponenten und Chemikalien zumindest solange widerstehen kann, bis die Gefahrenstelle geräumt werden kann.

Insbesondere bei Schiffen ist ein solches Fehlerszenario absolut unerwünscht, da dies im Extremfall ein Ausbooten der Passagiere und der Besatzung zur Folge haben kann. Darüberhinaus kann bei Schiffen aus nicht temperaturfesten Materialien wie üblichen Kunststoffen oder dergleichen ein offener Batteriebrand zu einer Leckage führen, was im Extremfall sogar das Sinken eines Schiffes mit verantworten könnte.

Wünschenswert ist es, einen Batteriebrand durch zusätzlich absichernde Maßnahmen garantiert zu verhindern.

An dieser Stelle setzt die Erfindung an, deren Aufgabe es ist, ein Verfahren und eine Batterie sowie ein Wasserfahrzeug mit einer solchen Batterie anzugeben, durch das ein Batteriebrand sicher vermieden ist. Insbesondere soll ein Konzept angegeben werden, das unabhängig von einem üblichen Kühlsystem funktioniert. Insbesondere soll ein Konzept angegeben werden, das selbsttätig funktioniert, insbesondere auch für den Fall, dass andere Notfallsysteme versagen.

Die Aufgabe betreffend das Verfahren wird durch ein Verfahren der eingangs genannten Art gelöst, das die Schritte aufweist:
- Feststellen eines Notfalles, der zur irreparablen Beschädigung der Batterie führt,
- Entnehmen von Umgebungswasser aus der Umgebung des Wasserfahrzeugs und
- Fluten der Batterie mit dem Umgebungswasser, um eine Eskalation des Batteriezustandes zu verhindern.

Die Erfindung geht von der Überlegung aus, dass Wasserfahrzeuge gegenüber Land- und Luftfahrzeugen den Vorteil haben, dass Wasser in praktisch beliebigen Mengen zur Verfügung steht. Zwar kann bei stationären Anlagen wie dem üblichen Kühlsystem einer Batterie Wasser in ausreichenden Mengen zur Verfügung gestellt werden; genau dies erweist sich jedoch bei Land- und Luftfahrzeugen ebenso wie bei Wasserfahrzeugen aufgrund einer nicht praktikablen Mitnahme von entsprechenden Wassermengen als unmöglich. Die Erfindung hat erkannt, dass sich aber Umgebungswasser eines Wasserfahrzeugs im Notfall dazu eignet, die Batterie zu fluten und damit eignet, eine unerwünschte Energiefreisetzung in den Wasserfahrzeugkörper oder gar einen Brand der Batterie im schlimmsten Fall zu vermeiden. Die Erfindung hat erkannt, dass als "Ultima Ratio" die Batterie eines Wasserfahrzeugs, insbesondere im Falle eines ohnehin nicht mehr zu rettenden fehlerhaften Zustandes, mit Umgebungswasser geflutet werden kann - dies unter billigender Inkaufnahme einer irreparablen Beschädigung der Batterie. Dies betrifft insbesondere den Fall, einer Lithium-Ionen-Batterie, die besonders anfällig für energie- oder brandfreisetzende Unfälle aufgrund ihrer Materialbeschaffenheit ist.

Die Erfindung hat insbesondere erkannt, dass ein Notfallszenario entsprechend definiert werden kann, ohne dass die Flutung der Batterie einen Mehrschaden bedeuten würde. Unter einem Notfall gemäß dem Konzept der Erfindung kann sowohl ein kontrollierbarer Notfall als auch ein irreparabler Notfall zu verstehen sein, infolge dessen -sei es durch ein Batteriemanagementsystem oder selbst regelnd- ein Fluten der Batterie mit Umgebungswasser erfolgt, um Schlimmeres zu verhindern. Das Konzept der Erfindung nimmt dabei billigend eine ggfs. irreparable Beschädigung der Batterie in Kauf, um Schlimmeres zu verhindern; insbesondere um im schlimmsten Fall einen Brand der Batterie zu verhindern oder zu löschen. Die Erfindung hat gegenüber üblichen Wasserkühlsystemen für eine Batterie erkannt, dass diese im Allgemeinen -insbesondere in einem Notfall- gegebenenfalls nicht mehr ausreichend Kühlwasser zur Verfügung haben könnten, um eine Batterie vor einer Energiefreisetzung zu bewahren oder in einem Brandfalle mit ausreichendem Kühl- oder Löschwasser zu versehen. Die Erfindung geht dabei von der Überlegung aus, dass es gerade in einem Notfall einer regulären Wasserkühlung dazu an einer ausreichenden Wassermenge mangeln könnte. Das Konzept der Erfindung behebt diese Nachteile und führt in jedem Fall zu einer Brandverhinderung beziehungsweise gegebenenfalls zu einer Verhinderung einer Energiefreisetzung beziehungsweise Explosion der Batterie.

Vorteilhafte Weiterbildungen der Erfindung sind den Unteransprüchen zu entnehmen, die im Einzelnen vorteilhafte Möglichkeiten angeben, das oben erläuterte Konzept im Rahmen der Aufgabenstellung sowie hinsichtlich weiterer Vorteile zu realisieren.

Besonders vorteilhaft wird im Rahmen des Verfahrens der Notfall festgestellt im Falle einer Überhitzung der Batterie. Diese erste Weiterbildung sieht bereits für diesen Fall vor, dass die Batterie mit dem Umgebungswasser geflutet wird.

Insbesondere ist ein Notfall betroffen, zu dem festgestellt wird, dass die Batterie durch ein Batteriemanagementsystem bereits nicht mehr abgeschaltet werden kann, beziehungsweise die Batterie nicht mehr entladen werden kann, selbst wenn sie abgeschaltet würde. Wenn also der unwahrscheinliche Fall eintreten sollte, dass die Batterie soweit überhitzt, dass weder das Batteriemanagementsystem noch ein Abschalten einen Brand der Batterie verhindern kann, ist davon auszugehen, dass die Batterie dauerhaften Schaden nimmt und eine Gefahr für die Umgebung darstellt. Gemäß dieser zweiten Weiterbildung ist dieser Fall als eine weitere Eskalation beziehungsweise Verschlimmerung des Batteriezustandes zu sehen, so dass in dem Fall ein Fluten der Batterie mit Umgebungswasser erfolgen kann.

Gemäß einer einen weiter eskalierenden Notfall betreffenden dritten Weiterbildung wird festgestellt, dass die Temperatur der Batterie in einen explosionsgefährlichen Bereich gerät. Auch in diesem Fall kann vorgesehen sein, dass die Batterie mit Umgebungswasser geflutet wird.

Besonders bevorzugt ist zur Umsetzung des Konzepts ein Fluten der Batterie durch eine vom Notkühlsystem separate Leitung, insbesondere Umgebungswasserleitung, vorgesehen. Damit erweist sich das insofern als Notfallkühlsystem für die Batterie zur Verfügung gestellte System als unabhängig von dem üblichen Kühlsystem. Insbesondere handelt es sich bei der separaten Leitung um eine Umgebungswasserleitung an die Umgebungswasser ansteht. Die Leitung kann, muss aber nicht, eine Pumpe aufweisen.

Im Rahmen einer bevorzugten Weiterbildung ist vorgesehen, dass ein Fluten der Batterie für den Fall einer Druckentlastung der Batterie erfolgt. Insbesondere hat es sich bewährt, dass ein Fluten der Batterie selbstregelnd durch die Druckentlastung erfolgt. Dieses besonders bevorzugte Konzept geht davon aus, dass eine Druckentlastung der Batterie als solche zum einen im Falle eines Notfalle noch akzeptiert werden könnte und zum anderen ein sicheres Zeichen ist, dass ein Fluten der Batterie mit Umgebungswasser zu erfolgen hat, um Schlimmeres zu vermeiden. Die Weiterbildung geht davon aus, dass für diesen Fall das Containment der Batterie noch ausreichend intakt ist, um ein reguliertes Fluten der Batterie zu ermöglichen. Ausgehend von diesem Ansatz ist in einer besonders bevorzugten Weiterbildung vorgesehen, dass ein Fluten der Batterie durch eine Berstscheibe derselben erfolgt. Üblicherweise kann im Normalbetrieb eine Druckentlastungsöffnung mit einer Berstscheibe verschlossen sein, damit Feuchtigkeit, Staub oder dergleichen Fremdteile nicht in das Containment der Batterie eindringen können. Bei Wasserfahrzeugen ist es möglich, wie von der Weiterbildung erkannt, diese Druckentlastungsöffnung druckfest und wasserdicht an das Containment anzuschließen und die Berstscheibe nur bis zu einem über einem Normalbetriebsdruck liegenden Berstdruck auszuführen. Besonders bevorzugt ist es, ein Fluten selbsttätig mit Wasser unterhalb der Wasserlinie durchzuführen. Dazu ist besonders vorteilhaft vorgesehen, dass die Berstscheibe unterhalb der Wasserlinie des Wasserfahrzeugs, insbesondere eines Wasserfahrzeugkörpers, angeordnet ist. Beispielsweise kann die Batterie im Rumpf des Wasserfahrzeugs angeordnet sein und an die Berstscheibe eine Umgebungswasserleitung angeschlossen sein, die zu einem Rumpfauslass führt, an dem Umgebungswasser ansteht.

Dieses in bevorzugter Weise weiterbildende Konzept sieht vor, dass das Batteriecontainment ebenfalls wasserdicht ist, so dass im Notfalle -wenn gemäß der Weiterbildung die Berstscheibe durch einen Überdruck jenseits des Berstdruckes ausgeworfen wirddie Batterie in selbstregelnder Weise geflutet wird. Vorteilhaft ist darüberhinaus vorgesehen, dass alle anderen Umgebungswasser führenden Teile weiterhin wasserdicht bleiben, um ein Eindringen von Umgebungswasser in den Schiffskörper zu verhindern. Dies gilt vor allem für das Containment der Batterie.

Insbesondere ist es vorgesehen, dass beim Fluten der Batterie ein Umlauf von Umgebungswasser in dem Containment der Batterie erfolgt. Die Weiterbildung sorgt dafür, dass eine Wärmeabfuhr ausreichend ist, um einen weiteren Druckaufbau im Containment der Batterie zu unterbinden. Vorzugsweise erfolgt ein Umlauf durch natürliche Konvektion im Rahmen eines Naturumlaufs. Ein Umlauf kann auch pumpenunterstützt sein. Insbesondere ist vorgesehen, dass Siedeprodukte bei der Notkühlung aus dem Containment in die Umgebung abgeführt werden. Die vorgenannten Weiterbildungen sehen somit vorteilhaft vor, dass entweder eine Siedetemperatur beim kühlenden Umgebungswasser verhindert wird oder aber Siedeprodukte wie Wasserdampf oder dergleichen druckausgleichend in die Umgebung abgeführt werden.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
- Fig. 1A: ein generelles Ablaufdiagramm für ein Verfahren zur Notkühlung und/oder Notlöschung einer Batterie eines Wasserfahrzeugs gemäss einer bevorzugten Ausführungsform;
- Fig. 1B: eine schematische Darstellung eines Wasserfahrzeugs mit einer Batterie gemäß einer bevorzugten Ausführungsform zur Durchführung des Verfahrens der Fig.1A;
- Fig. 3: ein bevorzugtes Ablaufdiagramm zum Feststellen eines Notfalls gemäß der bevorzugten Ausführungsform der Fig.1;
- Fig. 4: ein Ablaufdiagramm für eine besonders bevorzugte Ausführungsform eines Verfahrens, bei dem eine Notfalllöschung der Batterie nach einer Druckentlastung und selbstregelnd erfolgt für eine bevorzugte Ausführungsform der Fig. 1.

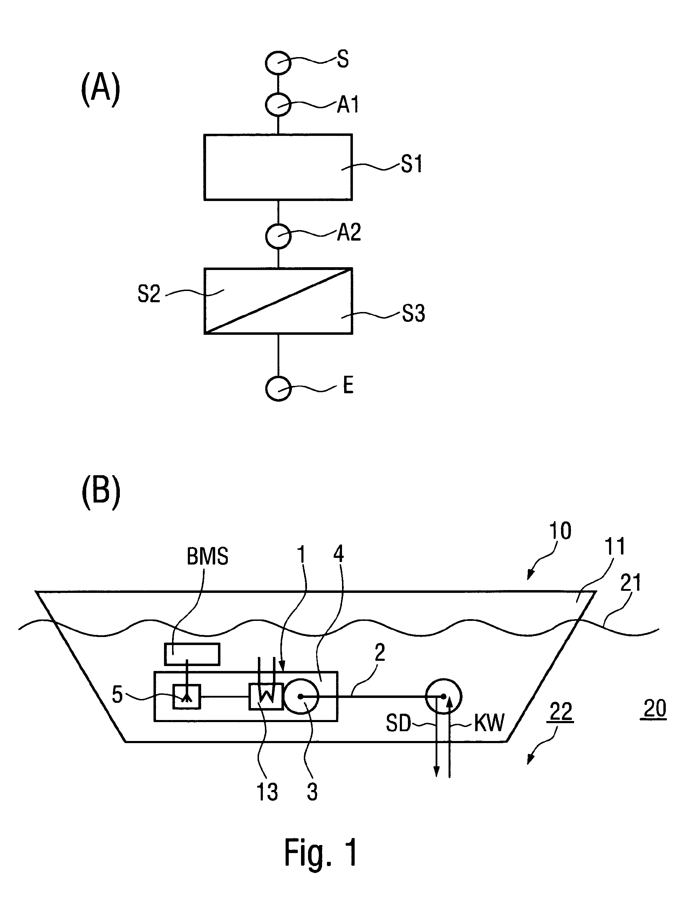

Fig. 1 zeigt in Ansicht (A) einen besonders bevorzugten Verfahrensablauf zur Notlöschung einer in Ansicht (B) dargestellten Batterie 1 eines Wasserfahrzeugs 10. Ein Wasserfahrzeug 10 mit dem vorliegenden Ausführungsbeispiel weist eine Lithium-Ionen- oder ähnliche Batterie 1 auf und hat einen auch als Rumpf bezeichneten Wasserfahrzeugkörper 11 aus nicht temperaturbeständigen Materialien. Dies ist vorliegend der Fall bei Produktionsyachten bis zu 50 Meter, Patrouillenbooten oder militärischen Schiffen aus Kunststoffen, wie z. B. GFK oder CFK.

Gerade in einem hier beschriebenen Beispiel ist selbst bei Versagen der betriebsmäßigen Schutzeinrichtung eines regulären Kühlsystems 13 für die Batterie 1 vorzusehen, dass die Batterie 1 nicht unkontrolliert in Brand gerät und somit keinesfalls Wärme freisetzen kann, die eine Gefahr für die Integrität des sie tragenden Wasserfahrzeugkörpers 11 darstellt.

Die Ausführungsform hat dabei berücksichtigt, dass es gerade bei Wasserfahrzeugen 10 eben nicht ausreichend ist, dass die Batterie 1 vom Containment 4 nur für eine bestimmte Zeit eingeschlossen bleibt, wie es beispielsweise im automotiven Bereich ausreichend wäre.

Eine entsprechende Hardware und/oder Software, wie zum Beispiel ein Computerprogrammprodukt oder eine entsprechende Sensorik, können in geeigneter Weise im Rahmen des Batteriemanagementsystems BMS realisiert sein. Beispielsweise kann ein Softwaremodul gemäß einem in Fig. 1A und Fig. 2 und Fig. 3 dargestellten Flussdiagramm im Rahmen eines Notfallmodus bei einem BMS zur Verfügung gestellt werden.

Bezugnehmend auf Fig. 1A wird nach dem Start S des Notfallverfahrens -z.B. getriggert durch das Batteriemanagementsystem BMS der Batterie 1 oder sonstige Umgebungsindikatoren- in einem ersten Schritt S1 zunächst ein Notfall festgestellt. Vorwiegend wird bei der im folgenden beschriebenen Ausführungsform ein Notfall als ein solcher Fall verstanden, bei dem eine vergleichsweise hohe Eskalationsstufe bereits besteht, nämlich der Fall, dass eine Druckentlastung der Batterie 1 erfolgte und/oder die Temperatur der Batterie 1 in einem explosionsgefährlichen Bereich liegt.

Für diesen Fall erfolgt in einem zweiten Schritt S2 die Entnahme von Umgebungswasser 22 aus der Umgebung 20 des Wasserfahrzeugkörpers 11 und in einem Schritt S3 das Fluten der Batterie 1 durch Umgebungswasser 22.

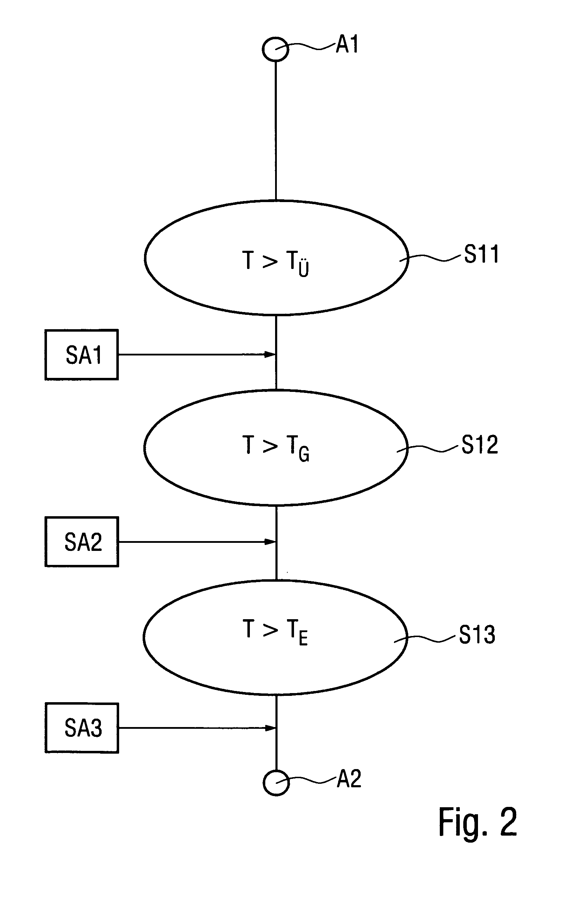

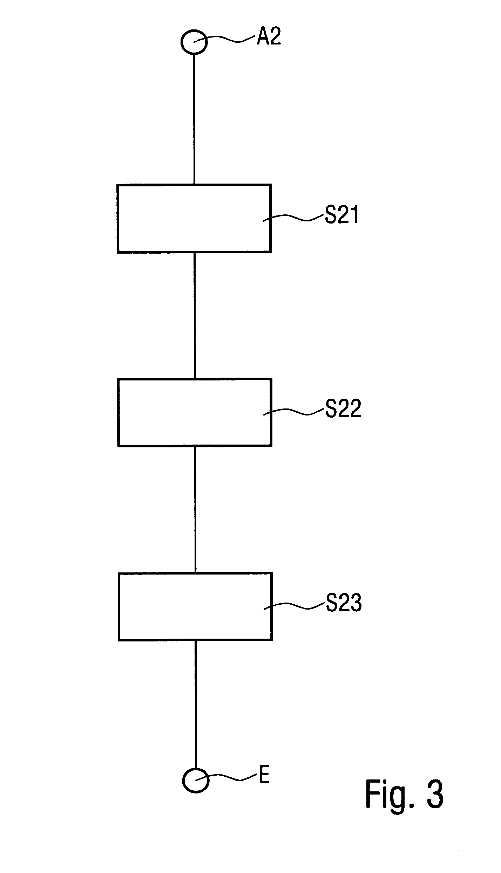

Das im Folgenden anhand von Fig. 2 und Fig. 3 im Einzelnen erläuterte Verfahren stellt aufgrund seiner Auslegung außerdem sicher, dass die Batterie 1 solange und in ausreichender Menge gekühlt wird, dass keine Gefahr eines Übergreifens des Brandes auf den Rumpf des Wasserfahrzeugs 10, zum Beispiel auf die Schiffsstruktur, besteht. Andererseits ist auch sichergestellt, dass das Eindringen von Umgebungswasser 22 in den Rumpf des Wasserfahrzeugs 10 sicher unterbunden ist.

Wie sich im Einzelnen anhand der Erläuterung, insbesondere zu Fig. 3, zeigt kann das vorliegend beschriebene Konzept ohne zusätzliche Betriebsmittel auskommen, nämlich insbesondere ohne zusätzliche Pumpen oder zusätzlichen Energiebedarf, um Umgebungswasser 22 in ausreichender Menge zur Kühlung der Batterie 1 desselben zuzuführen.

Im vorliegenden Fall nimmt das Konzept in Kauf, dass die Batterie 1 nach dem Fluten irreparabel beschädigt ist - dies allerdings bereits unter der Annahme, dass die Batterie 1 aufgrund der Notfallsituation ohnehin nicht mehr zu retten gewesen wäre. Das Verfahren endet E mit der Beseitigung der Notfallsituation.

Fig. 2 zeigt eine Ausbaustufe des Schrittes S1, die darin bestehen kann, dass unterschiedliche Temperaturen der Batterie überwacht werden vom Batteriemanagementsystem BMS. In einem ersten Schritt S11 kann vorgesehen sein, dass ein Überschreiten der Temperatur der Batterie oberhalb einer Überhitzungstemperatur TÜ vorliegt. Unter Berücksichtigung anderer Umgebungsindikatoren oder Systeminformationen SA1 kann grundsätzlich eine Notfallsituation signalisiert werden. Vorliegend ist dies bei der in Fig. 2 gezeigten Ausführungsform nicht der Fall.

In einer zweiten Eskalationsstufe wird überprüft, ob die Temperatur T der Batterie 1 eine Grenztemperatur TG überschritten hat, in der eine Notabschaltung der Batterie 1 nicht mehr möglich ist oder eine Batterie nicht mehr zu entladen ist. In diesem Fall kann unter Berücksichtigung anderer Umgebungsindikatoren oder Systeminformationen SA2 eine Notkühlung der Batterie 1 erfolgen. Bei dem in Fig. 2 dargestellten Beispiel ist dies nicht der Fall.

Bei dem in Fig. 2 dargestellten Fall wird aber positiv festgestellt, dass die Temperatur T der Batterie 1 einen explosionsgefährlichen Bereich TE erreicht hat. Eine solche Temperatur kann z.B. noch von einem an das Batteriemanagementsystem BMS signalgekoppelten Temperatursensor 5 gemessen werden. Darüberhinaus liefert eine anderer Umgebungsindikator oder Systeminformation SA3, dass eine Überdruckfunktion die Berstscheibe 3 der Batterie 1 gesprengt hat, so dass eine Überdruckentlastung der Batterie 1 stattfindet - dies ist im Schritt S21 der Fig.3 dargestellt. Daran anschließend erfolgt vorliegend selbstregelnd eine Notflutung der Batterie mit Umgebungswasser 22 wie dies im Schritt gemäß Schritt S22 der Fig.3 dargestellt ist, da das Umgebungswasser 22 an einem unterhalb einer Wasserlinie 21 liegenden Rumpfauslass 12 ansteht. In einem Schritt S21 wird wie erläutert, also das Fluten der Batterie durch Bersten der Berstscheibe 3 eingeleitet. In einem Schritt S22 erfolgt das Fluten der Batterie 1 durch die Berstöffnung der Berstscheibe 3 selbsttätig. Dazu ist vorliegend an die Berstscheibenöffnung eine Umgebungswasserleitung 2 angeschlossen, die zu einem Rumpfauslass 12 führt, an dem Umgebungswasser 22 ansteht. Diese vom übrigen Kühlsystem 13 separate Umgebungswasserleitung 2 ist im Übrigen wasserdicht an das Containment 4 der Batterie 1 angeschlossen und bildet mit dem Containment 4 der Batterie 1 einen geschlossenen Umgebungswasserkreislauf KW. An dem Umgebungswasserkreislauf KW steht insofern aus der Umgebung 20 des Wasserfahrzeugkörpers 11 unbegrenzt Umgebungswasser 22 zur Kühlung der Batterie 1 an. Ein Fluten der Batterie 1 im Schritt S22 erfolgt somit in ausreichendem Maße bis Brand- und/oder Explosionsgefahr für die Batterie 1 beseitigt sind.

In einem Schritt S23 ist darüberhinaus sichergestellt, dass die Konvektion von Umgebungswasser 22 im Umgebungswasserkreislauf KW ausreichend stattfindet. Damit ist auch ein Sieden des Umgebungswassers 22 in der Batterie 1 wirksam verhindert. Sollte dennoch ein Siedevorgang stattfinden, ist durch die Gestaltung der Umgebungswasserleitung 2 ausreichend sichergestellt, dass die Integrität derselben als auch des Containments 4, das heißt die Integrität des Umgebungswasserkreislaufs KW, bestehen bleibt. Vorteilhaft wird vorliegend dazu Siededampf SD oder dergleichen über die Umgebungswasserleitung 2 in die Umgebung 20 abgeleitet beziehungsweise druckentlastet: Dieser Vorgang kommt ohne weitere Energiezufuhr oder technische Maßnahmen aus und stellt das Löschen beziehungsweise Kühlen der Batterie 1 absolut sicher.

### Bezugszeichenliste

- SD: Siededampf
- KW: Umgebungswasserkreislauf
- S: Start
- E: Ende
- S1, S2, S3: Verfahrensschritte
- S11, S12, S13: Verfahrensschritte
- S21, S22, S23: Verfahrensschritte
- SA1, SA2, SA3: Systeminformation
- A1, A2: Anschluss
- T: Temperatur der Batterie
- TE: Temperatur im explosionsgefährlichen Bereich
- TG: Grenztemperatur
- TÜ: Überhitzungstemperatur
- 1: Batterie
- 2: Umgebungswasserleitung
- 3: Berstscheibe
- 4: Containment
- 5: Temperatursensor
- 10: Wasserfahrzeug
- 11: Wasserfahrzeugkörper
- 12: Rumpfauslass
- 13: Kühlsystem
- 20: Umgebung
- 21: Wasserlinie
- 22: Umgebungswasser

## Patentansprüche

1. Verfahren zur Notkühlung und/oder Notlöschung einer Batterie (1) eines Wasserfahrzeugs (10) aufweisend die Schritte:
- Feststellen (S1) eines Notfalles, der zur irreparablen Beschädigung der Batterie führt;
- Entnehmen (S2) von Umgebungswasser (22) aus der Umgebung (20) des Wasserfahrzeugs (10);
- Fluten (S3) der Batterie (1) mit dem Umgebungswasser (22), um eine Eskalation des Batteriezustandes zu verhindern.

2. Verfahren nach Anspruch 1 **dadurch gekennzeichnet, dass** der Notfall im Falle einer Überhitzung der Batterie (1) festgestellt wird (S11).

3. Verfahren nach Anspruch 1 oder 2 **dadurch gekennzeichnet, dass** der Notfall festgestellt wird, wenn ein Batteriemanagementsystem (BMS) eine Notabschaltung der Batterie (1) nicht vornehmen kann und/oder die Batterie (1) nicht mehr entladen kann (S12).

4. Verfahren nach einem der Ansprüche 1 bis 3 **dadurch gekennzeichnet, dass** der Notfall festgestellt wird, wenn die Temperatur der Batterie (1) in einen explosionsgefährlichen Bereich gerät (S13).

5. Verfahren nach einem der Ansprüche 1 bis 4 **dadurch gekennzeichnet, dass** ein Fluten der Batterie (1) durch eine vom Notkühlsystem (13) separate Leitung (2) erfolgt.

6. Verfahren nach einem der Ansprüche 1 bis 5 **dadurch gekennzeichnet, dass** ein Fluten bei Druckentlastung der Batterie (1) erfolgt, insbesondere selbstregelnd bei Druckentlastung der Batterie (1) erfolgt.

7. Verfahren nach einem der Ansprüche 1 bis 4 **dadurch gekennzeichnet, dass** ein Fluten durch eine Berstscheibe (3) des Containments (4) der Batterie (1) erfolgt.

8. Verfahren nach einem der Ansprüche 1 bis 7 **dadurch gekennzeichnet, dass** ein Fluten selbsttätig mit Umgebungswasser (22) unterhalb der Wasserlinie (21) erfolgt.

9. Verfahren nach einem der Ansprüche 1 bis 8 **dadurch gekennzeichnet, dass** beim Fluten der Batterie (1) ein Umlauf, insbesondere Naturumlauf oder pumpenunterstützter Umlauf, von Umgebungswasser (22) in deren Containment (4) erfolgt.

10. Verfahren nach einem der Ansprüche 1 bis 9 **dadurch gekennzeichnet, dass** Siedeprodukte bei der Notkühlung aus dem Containment (4) in die Umgebung (20) abgeführt werden.

11. Wasserfahrzeug (10) mit einer Batterie (1), die ein Containment (4) mit einer Berstscheibe (3) zur Druckentlastung aufweist,
**dadurch gekennzeichnet, dass**
die Berstscheibe (3) unterhalb der Wasserlinie (21) eines Wasserfahrzeugkörpers (11) angeordnet ist, und beim Auftreten eines Notfalles, der zur irreparablen Beschädigung der Batterie (1) führt, Umgebungswasser (22) in das Containment (4) lässt, um die Batterie zu fluten und eine Eskalation des Batteriezustandes zu verhindern.

12. Wasserfahrzeug (10) nach Anspruch 11,
**dadurch gekennzeichnet, dass** die Batterie (1) im Rumpf des Wasserfahrzeugkörpers (11) angeordnet und an die Berstscheibe (3) eine Umgebungswasserleitung (2) zu einem Rumpfauslass (12) angeschlossen ist, an dem Umgebungswasser (22) ansteht.

## Claims

1. Method for the emergency cooling and/or emergency extinguishing of a battery (1) of a watercraft (10), comprising the steps:
- detecting (S1) an emergency which brings about irreparable damage to the battery;
- obtaining (S2) water (22) from the environment (20) of the watercraft (10); and
- flooding (S3) the battery (1) with the water (22) from the environment, in order to prevent an escalation of the state of the battery.

2. Method according to Claim 1, **characterized in that** the emergency is detected (S11) in the case of overheating of the battery (1).

3. Method according to Claim 1 or 2, **characterized in that** the emergency is detected if a battery management system (BMS) cannot perform emergency switching off of the battery (1) and/or the battery can no longer discharge (S12).

4. Method according to one of Claims 1 to 3, **characterized in that** the emergency is detected if the temperature of the battery (1) enters a region at risk of explosion (S13).

5. Method according to one of Claims 1 to 4, **characterized in that** the battery (1) is flooded by means of a line (2) which is separate from the emergency cooling system (13).

6. Method according to one of Claims 1 to 5, **characterized in that** flooding takes place when the pressure of the battery (1) is relieved, in particular in a self-regulating fashion when the pressure of the battery (1) is relieved.

7. Method according to one of Claims 1 to 4, **characterized in that** flooding takes place by means of a burst disc (3) in the containment means (4) of the battery (1).

8. Method according to one of Claims 1 to 7, **characterized in that** flooding takes place automatically with water (22) from the environment underneath the water line (21).

9. Method according to one of Claims 1 to 8, **characterized in that** during the flooding of the battery (1) a circulation, in particular natural circulation or pump-assisted circulation, of water (22) from the environment in the containment means (4) thereof takes place.

10. Method according to one of Claims 1 to 9, **characterized in that** boiling products during the emergency cooling are discharged from the containment means (4) into the environment (20).

11. Watercraft (10) having a battery (1) which has a containment means (4) with a burst disc (3) for relieving the pressure,
**characterized in that**
the burst disc (3) is arranged underneath the water line (21) of a watercraft body (11), and when an emergency which brings about irreparable damage to the battery (1) occurs, it lets water (22) from the environment into the containment means (4) in order to flood the battery and prevent escalation of the state of the battery.

12. Watercraft (10) according to Claim 11, **characterized in that** the battery (1) is arranged in the hull of the watercraft body (11), and a line (2) for the water from the environment leading to a hull outlet (12) at which water (22) from the environment is present is connected to the burst disc (3).

## Revendications

1. Procédé de refroidissement d'urgence et/ou d'extinction d'urgence d'une batterie (1) d'un véhicule marin (10), présentant les étapes suivantes:
- constater (S1) un cas d'urgence, qui conduit à des dégâts irréparables à la batterie;
- prélever (S2) de l'eau environnante (22) dans l'environnement (20) du véhicule marin (10);
- noyer (S3) la batterie (1) avec l'eau environnante (22) afin d'empêcher une aggravation de l'état de la batterie.

2. Procédé selon la revendication 1, **caractérisé en ce que** l'on constate le cas d'urgence (S11) dans le cas d'une surchauffe de la batterie (1).

3. Procédé selon la revendication 1 ou 2, **caractérisé en ce que** l'on constate le cas d'urgence lorsqu'un système de gestion de la batterie (BMS) ne peut pas opérer une coupure d'urgence de la batterie (1) et/ou quand la batterie (1) ne peut plus se décharger (S12).

4. Procédé selon l'une quelconque des revendications 1 à 3, **caractérisé en ce que** l'on constate le cas d'urgence, lorsque la température de la batterie (1) arrive dans une plage présentant des risques d'explosion (S13).

5. Procédé selon l'une quelconque des revendications 1 à 4, **caractérisé en ce que** l'on effectue un noyage de la batterie (1) par une canalisation (2) séparée du système de refroidissement d'urgence (13).

6. Procédé selon l'une quelconque des revendications 1 à 5, **caractérisé en ce que** l'on effectue un noyage en cas de détente de pression de la batterie (1), en particulier par autorégulation en cas de détente de pression de la batterie (1).

7. Procédé selon l'une quelconque des revendications 1 à 4, **caractérisé en ce que** l'on effectue un noyage par une plaque de rupture (3) de l'enceinte (4) de la batterie (1).

8. Procédé selon l'une quelconque des revendications 1 à 7, **caractérisé en ce que** l'on effectue un noyage automatiquement avec de l'eau environnante (22) en dessous de la ligne de flottaison (21).

9. Procédé selon l'une quelconque des revendications 1 à 8, **caractérisé en ce que**, en cas de noyage de la batterie (1), on opère une circulation, en particulier une circulation naturelle ou une circulation entretenue par une pompe, d'eau environnante (22) dans l'enceinte (4).

10. Procédé selon l'une quelconque des revendications 1 à 9, **caractérisé en ce que** l'on évacue des produits d'ébullition lors du refroidissement d'urgence hors de l'enceinte (4) dans l'environnement (20).

11. Véhicule marin (10) avec une batterie (1), qui présente une enceinte (4) avec une plaque de rupture (3) pour la détente de pression, **caractérisé en ce que** la plaque de rupture (3) est disposée en dessous de la ligne de flottaison (21) d'un corps de véhicule marin (11) et, lorsqu'il se produit un cas d'urgence qui conduit à des dégâts irréparables à la batterie (1), on laisse entrer de l'eau environnante (22) dans l'enceinte (4) afin de noyer la batterie (1) et empêcher une aggravation de l'état de la batterie.

12. Véhicule marin (10) selon la revendication 11, **caractérisé en ce que** la batterie (1) est disposée dans la coque du corps de véhicule marin (11) et une conduite d'eau environnante (2) vers une sortie de la coque (12), où il se trouve de l'eau environnante (22), est raccordée à la plaque de rupture (3).
